# NEUE EUROPÄISCHE PATENTSCHRIFT

(11) **EP 1 731 017 B2**
(45) Veröffentlichungstag und Bekanntmachung des Hinweises auf die Entscheidung über den Einspruch: **05.06.2013**
(45) Hinweis auf die Patenterteilung: 17.09.2008
(21) Anmeldenummer: 06006060.5
(22) Anmeldetag: 24.03.2006
(51) Int. Cl.: A01D 41/127

(54) **Verfahren zur Steuerung einer Erntemaschine**
Method for controlling a harvesting machine
Méthode de commande d'une moissoneuse

(30) Priorität: 06.06.2005 DE 102005026159
(43) Veröffentlichungstag der Anmeldung: 13.12.2006
(73) Patentinhaber: CLAAS Selbstfahrende Erntemaschinen GmbH, 33428 Harsewinkel (DE)
(72) Erfinder: Behnke, Willi, 33803 Steinhagen (DE); Bussmann, Christoph, 33428 Harsewinkel (DE); Baumgarten, Joachim, Dr., 48361 Beelen (DE); Wilken, Andreas, 49143 Bissendorf (DE); Fitzner, Werner, 48231 Warendorf (DE)

(56) Entgegenhaltungen:
- EP-A- 1 277 388
- EP-A- 1 523 872
- EP-A1- 1 145 617
- EP-A1- 1 297 733
- DE-A1- 19 934 882

## Beschreibung

Die Erfindung betrifft ein Verfahren zur Steuerung einer Erntemaschine, insbesondere einer selbstfahrenden Erntemaschinen wie eines Mähdreschers, eines Feldhäckslers etc., bei dem auf Basis bestimmter erfasster Steuerbefehle in mehreren separaten, definierten Steuerungsprozessen verschiedene Aggregate der Erntemaschine eingestellt und/oder überwacht werden. Die Erfindung betrifft des Weiteren eine entsprechende Steuereinrichtung, mit der ein solches Steuerungsverfahren durchführbar ist, sowie eine Erntemaschine mit einer solchen Steuereinrichtung, sowie ein Computerprogrammprodukt mit Programmcode-Mitteln, um alle Schritte des genannten Verfahrens auszuführen.

Landwirtschaftliche Erntemaschinen verfügen zur Bearbeitung verschiedener Erntegüter über ein oder mehrere einstellbare Arbeitsaggregate. Dabei sind die einzelnen Aggregate bei modernen selbstfahrenden Erntemaschinen mit in der Regel aus der Fahrerkabine fernbedienbaren Stelleinrichtungen ausgestattet, mit denen verschiedene Steuerparameter der Arbeitsaggregate eingestellt werden können. Zu den typischen Arbeitsaggregaten eines Mähdreschers gehören beispielsweise das Dreschwerk, welches üblicherweise einen Dreschkorb und eine oder mehrere Dreschtrommeln aufweist, sowie eine dem Dreschwerk nachgeschaltete Reinigungseinrichtung, welche in der Regel ein Gebläse und mehrere Siebe umfasst. Weiterhin weist jede selbstfahrende Erntemaschine ein entsprechendes Antriebsaggregat auf, welches für den Antrieb der Erntemaschine sorgt. Unterschiedliche Erntegüter und Erntebedingungen wie Feuchtigkeit, Bestandshöhe, Bodenbeschaffenheit etc. erfordern, dass die einzelnen Aggregate bzw. deren einstellbare Steuerparameter möglichst genau an den individuellen laufenden Ernteprozess angepasst werden, um insgesamt ein optimales Arbeitsergebnis zu erzielen.

Trotz vieler Einstellhilfen, welche die Hersteller der Erntemaschinen den Bedienern anbieten - wie z. B. ausführliche Bedienerschulungen, Handlisten, aus denen der Bediener für verschiedene Erntesituationen vorgegebene Einstellwerte entnehmen kann, oder elektronische Hilfsmittel wie elektronische Bordinformationssysteme, von denen optimierte Einstellwertkombinationen für verschiedenste Erntesituationen zur Auswahl vorgegeben werden - ist es für die Bediener nach wie vor relativ schwierig, die Maschine so einzustellen, dass sie gemäß den gewünschten Vorgaben optimal arbeitet. Dies gilt vor allem für unerfahrene und/oder ungeübte Bediener, insbesondere zu Beginn einer Erntesaison. Daher kommt es in vielen Fällen vor, dass die Erntemaschine bzw. deren Arbeitsaggregate nicht optimal an den aktuellen Ernteprozess angepasst sind und vorhandene Ernteleistungskapazitäten der Maschine ungenutzt bleiben, schlechte Arbeitsergebnisse erzielt werden oder sogar unnötige Ernteverluste erzeugt werden.

Zur Lösung dieses Problems werden immer mehr Prozesse zur Einstellung, insbesondere Optimierung, und/oder Überwachung der Erntemaschine bzw. deren Aggregate automatisiert. So wird beispielsweise in der DE 101 47 733 A1 ein automatisches Verfahren zur Optimierung des Dreschwerks und der Reinigungseinrichtung einer landwirtschaftlichen Erntemaschine angegeben. Dabei wird jeweils nur ein Steuerparameter der Erntemaschine bei ansonsten gleicher Einstellung und unter gleichbleibenden Erntebedingungen variiert. Anschließend wird anhand eines Vergleichs der Arbeitsergebnisse genau derjenige Einstellwert für den betreffenden Steuerparameter ausgewählt, der zu einem besseren Arbeitsergebnis geführt hat. Dabei können die Arbeitsergebniswerte insbesondere aufgezeichnet werden und anhand der aufgezeichneten Arbeitsergebnisse kann eine Beziehung zwischen dem variierten Einstellparameter und dem erzielten Arbeitsergebnis ermittelt werden, auf Basis derer dann ein optimaler Einstellparameter gewählt werden kann. Durch dieses Verfahren erkennen auch ungeübte Bediener relativ schnell, ob, wann und inwieweit der variierte Steuerparameter einen Einfluss auf das Arbeitsergebnis hat, und können für eine entsprechende Einstellung des Steuerparameters sorgen. Die Einstellung kann grundsätzlich auch automatisch erfolgen.

Weiterhin wird z. B. in der DE 102 53 081 A1 eine Steuereinrichtung beschrieben, mit der die Fahrgeschwindigkeit einer Erntemaschine automatisch eingestellt und überwacht werden kann.

Ein Problem bei der Automatisierung solcher Prozesse kann dadurch auftreten, dass bestimmte Steuerungsprozesse miteinander kollidieren. So ist es beispielsweise zur Optimierung der Dreschwerkeinstellung oder der Reinigungseinrichtung notwendig, dass die Fahrtgeschwindigkeit so geregelt wird, dass der Durchsatz konstant ist. Eine Aktivierung einer Fahrtgeschwindigkeitsregelung, welche auf eine konstante Geschwindigkeit oder auf einen konstanten Verlust regelt, wäre hierbei nicht angebracht. Zudem ist es auch kontraproduktiv, wenn gleichzeitig eine Optimierung des Dreschwerks und der Reinigungseinrichtung stattfinden würde, da mit der Verstellung des Dreschwerks die Eingangsparameter für die Reinigungseinrichtung verändert werden und andererseits die Optimierung der Reinigungseinrichtung zumindest kurzzeitige Variationen der Dreschwerkeinstellung erfordert.

Je mehr einzelne Teilprozesse auf der Erntemaschine automatisiert werden, umso schwieriger wird es für den Bediener, zu beurteilen, welche Prozesse gleichzeitig laufen dürfen und wenn ja, in welchen Betriebsarten.

In der EP 1 277 388 A1 wird ein Steuerungssystem mit einem lernenden Fuzzy-Inferenzsystem mit unscharfer Logik beschrieben, welches in der Lage sein soll, Arbeitsbedingungen zu lernen und sich an sie zu erinnern. Mit diesem Steuerungssystem soll vermieden werden, dass Wechselwirkungen zwischen verschiedenen Ernteuntersystemen, d. h. zwischen verschiedenen automatisierten Teilprozessen zur Steuerung verschiedener Aggregate der Erntemaschine, nicht berücksichtigt werden und es daher zu Fehleinstellungen kommt. Das dort beschriebene Steuerungssystem ist jedoch außerordentlich kompliziert aufgebaut und erfordert eine erhebliche Rechenkapazität und Rechengeschwindigkeit, welche derzeit in Erntemaschinen noch nicht zur Verfügung stehen.

Es ist daher eine Aufgabe der vorliegenden Erfindung, ein Verfahren sowie eine Steuereinrichtung zur Steuerung einer Erntemaschine anzugeben, bei dem auf einfache und kostengünstige Weise eine Kollision verschiedener auf der Erntemaschine ablaufender Steuerungsprozesse vermieden wird.

Diese Aufgabe wird zum einen durch ein Verfahren gemäß Patentanspruch 1 und zum anderen durch eine Steuereinrichtung gemäß Patentanspruch 7 gelöst.

Erfindungsgemäß werden bei dem Verfahren, wie eingangs beschrieben, auf Basis bestimmter erfasster Steuerungsbefehle, welche z. B. von einem Bediener eingegeben werden können, in mehreren separaten definierten Steuerungsprozessen verschiedene Aggregate der Erntemaschine eingestellt und/oder überwacht wobei die Steuerungsprozesse einen Reinigungsoptimierungsprozess, einen Dreschwerkoptimierungsprozess und einen Fahrgeschwindigkeitsregelungsprozess umfassen, wobei mittels einer Prozesskoordinationseinheit eine Betriebsart eines ersten Steuerungsprozesses, welcher den Fahrgeschwindigkeitsregelungsprozess umfasst, unter Berücksichtigung einer aktuellen Betriebsart eines zweiten Steuerungsprozesses, der den Reinigungsoptimierungsprozess oder den Dreschwerkoptimierungsprozess umfasst, bestimmt wird, wobei der Fahrgeschwindigkeitsregelungsprozess bei einem Einschalten des Reinigungsoptimierungsprozesses oder des Dreschwerkoptimierungsprozesses in eine Durchsatzregelungsbetriebsart umgeschaltet wird, während eine Änderung der Betriebsart des Fahrgeschwindigkeitsregelungsprozesses nur möglich ist, wenn weder der Reinigungsoptimierungsprozess noch der Dreschwerkoptimierungsprozess aktiv sind.

Unter dem Begriff "Betriebsart" eines Prozesses im Sinne dieser Erfindung ist zu verstehen, ob der Prozess beispielsweise überhaupt aktiv ist, und wenn ja, in welcher Art und Weise der Prozess abläuft. Eine "Betriebsartänderung" im Sinne der Erfindung liegt also z. B. dann vor, wenn die Art des Parameters, auf den geregelt wird - und somit die Funktionsweise des gesamten Prozesses - geändert bzw. der Prozess aktiviert bzw. deaktiviert wird. Dagegen liegt keine Betriebsartänderung vor, wenn einfach ein Parameterwert geändert wird, um z. B. Einstellparameter anderer Aggregate oder Prozesse zu berücksichtigen. Ein Beispiel hierfür ist ein Fahrgeschwindigkeit-Regelungsprozess, welcher in einer Betriebsart beispielsweise auf eine konstante Sollgeschwindigkeit, also einen ersten Parameter, geregelt werden kann, und welcher in einer zweiten Betriebsart auf einen konstanten Erntegutdurchsatz, also auf einen zweiten Parameter, geregelt werden kann. Eine Betriebsartänderung ist dann z. B. das Umschalten von der genannten ersten Betriebsart auf die genannte zweite Betriebsart, d. h. es wird dann nicht mehr der erste Parameter (konstante Sollgeschwindigkeit), sondern der zweite Parameter (konstanter Solldurchsatz) berücksichtigt. Ebenso wäre eine Betriebsartumschaltung eine komplette Deaktivierung der Fahrgeschwindigkeitsregelung. Eine einfache Veränderung der Sollgeschwindigkeit oder des Solldurchsatzes ist dagegen nicht als Betriebsartänderung anzusehen, wodurch natürlich auch innerhalb des erfindungsgemäßen Verfahrens nicht ausgeschlossen ist, dass unter Berücksichtigung anderer Steuerungsprozesse zusätzlich eine Anpassung von Parameterwerten in einem Prozess durchgeführt wird.

Mit Hilfe des erfindungsgemäßen Steuerungsverfahrens kann auf sehr einfache Weise eine Kollision zwischen verschiedenen Steuerungsprozessen vermieden werden.

Eine erfindungsgemäße Steuereinrichtung benötigt neben einer Schnittstelle zur Erfassung von Steuerbefehlen - und ggf. zusätzlichen Eingangs-Steuerparametern - eine Steuersignalschnittstelle, beispielsweise in Form mehrer Steuersignalausgänge, zur Ansteuerung verschiedener Aggregate der Erntemaschine sowie eine Anzahl von Prozesssteuerungseinheiten, welche derart ausgebildet sind, dass sie auf Basis von erfassten Steuerbefehlen in separaten, definierten Steuerungsprozessen die verschiedenen Aggregate zur Einstellung und Überwachung über die Steuersignalschnittstelle mit ― entsprechend den Steuerungsprozessen ermittelten ― Steuersignalen beaufschlagen und einer mit den Prozesssteuerungseinheiten verbundenen Prozesskoordinationseinheit, welche derart ausgebildet ist, dass sie eine Betriebsartänderung eines ersten Steuerungsprozesses, welcher den Fahrgeschwindigkeitsregelungsprozess umfasst, unter Berücksichtigung einer aktuellen Betriebsart eines zweiten Steuerungsprozesses, der den Reinigungsoptimierungsprozess oder den Dreschwerkoptimierungsprozess umfasst, bestimmt und an die Prozesssteuerungseinheiten entsprechende Betriebsartvorgabesignale übermittelt, um auf Basis der eingegebenen Steuerbefehle die einzelnen Prozesssteuerungseinheiten mit Hilfe der Betriebsartvorgabesignale so anzusteuern, dass es keine Kollisionen zwischen den verschiedenen Steuerungsprozessen gibt, wobei der Fahrgeschwindigkeitsregelungsprozess bei einem Einschalten des Reinigungsoptimierungsprozesses oder des Dreschwerkoptimierungsprozesses in eine Durchsatzregelungsbetriebsart umgeschaltet wird, während eine Änderung der Betriebsart des Fahrgeschwindigkeitsregelungsprozesses nur möglich ist, wenn weder der Reinigungsoptimierungsprozess noch der Dreschwerkoptimierungsprozess aktiv sind.

Eine solche Steuereinrichtung kann beispielsweise in Form eines programmierbaren Mikroprozessors ausgebildet sein, wobei insbesondere die einzelnen Prozesssteuerungseinheiten sowie die Prozesskoordinationseinheit in Form von Software auf diesem Prozessor implementiert sind. Dabei ist es auch möglich, eine bereits vorhandene, programmierbar ausgebildete Steuereinrichtung einer Erntemaschine durch entsprechende Implementierung solcher in Form von Softwaremodulen realisierter Einrichtungen erfindungsgemäß auszubilden, sofern diese Steuereinrichtung eine entsprechende Schnittstelle zur Erfassung von Steuerbefehlen sowie eine Steuersignalschnittstelle zur Ansteuerung verschiedener Aggregate der Erntemaschine aufweist. Die erforderlichen Software-Komponenten bzw. alle erforderlichen Programmcodemittel können hierzu insbesondere im Rahmen eines Updates als Computerprogrammprodukt, beispielsweise von einem Datenspeicher, direkt in den Speicher der programmierbaren Steuereinrichtung geladen werden.

Die Prozesskoordinationseinheit ist den einzelnen Prozesssteuerungseinheiten vorzugsweise als ein zentrales Modul übergeordnet. Grundsätzlich ist es aber auch möglich, dass die Prozesskoordinationseinheit als Teileinheit innerhalb einer Prozesssteuerungseinheit realisiert ist. Dementsprechend würde dann die Prozesssteuerungseinheit, in welcher die Prozesskoordinationseinheit als Teilmodul realisiert ist, als "Master-Prozesssteuerungseinheit" auf die anderen Prozesssteuerungseinheiten einwirken. Auch in diesem Fall ist es aber letztlich die Prozesskoordinationseinheit, welche sowohl die Betriebsart der eigenen Prozesssteuerungseinheit als auch die der "fremden" Prozesssteuerungseinheiten bestimmt.

Die Unteransprüche enthalten jeweils besonders vorteilhafte Ausgestaltungen und Weiterbildungen der Erfindung.

In einem solchen Fahrgeschwindigkeitsregelungsprozess kann die Geschwindigkeit vorzugsweise in einer sogenannten "Tempomat"-Betriebsart in Abhängigkeit von einer konstanten Sollgeschwindigkeit geregelt werden. In einer weiteren Betriebsart, einer Durchsatzregelungs-Betriebsart, kann die Geschwindigkeit auf einen konstanten Erntegutdurchsatz geregelt werden. In einer dritten Betriebsart, einer Verlustregelungs-Betriebsart, kann dagegen die Geschwindigkeit auf eine konstante Erntegutverlustmenge geregelt werden.

Vorzugsweise wird ein zur Einstellung einer bestimmten Betriebsart eines ersten Steuerungsprozesses bestimmter Steuerbefehl, z. B. des Fahrgeschwindigkeitsregelungsprozesses, zunächst an die Prozesskoordinationseinheit übergeben. Diese bestimmt dann auf Basis des Steuerbefehls und unter Berücksichtigung der Betriebsart, beispielsweise anhand von entsprechenden Statusinformationen eines zweiten Steuerungsprozesses, z. B. des Reinigungs- oder Dreschwerkoptimierungsprozesses, die Betriebsart des ersten Steuerungsprozesses. Die Schnittstelle zur Erfassung der Steuerbefehle ist hierzu vorzugsweise so mit der Prozesskoordinationseinheit verbunden, dass von der Schnittstelle erfasste Steuerbefehle zunächst an die Prozesskoordinationseinheit übergeben werden.

Um die erforderlichen Statusinformationen über die aktuelle Betriebsart eines Steuerungsprozesses zu erhalten, weist die Prozesskoordinationseinheit vorzugsweise einen geeigneten Prozessstatuseingang auf.

Vorzugsweise kann auch bei einer Betriebsartänderung eines zweiten Steuerungsprozesses ein erster Steuerungsprozess von der Prozesskoordinationseinheit automatisch in eine andere Betriebsart umgeschaltet werden.

Hierbei wird der Fahrgeschwindigkeitsregelungsprozess bei einem Einschalten des Reinigungsoptimierungsprozesses oder des Dreschwerkoptimierungsprozesses in die Durchsatzregelungs-Betriebsart umgeschaltet, wenn der Fahrgeschwindigkeitsregelungsprozess vorher in einer anderen Betriebsart, beispielsweise in der Tempomat-Betriebsart oder der Verlustregelungs-Betriebsart, aktiv ist.

Bei einem besonders bevorzugten Ausführungsbeispiel wird ein in einem ersten Steuerungsprozess oder in einem zweiten Steuerungsprozess ermittelter Parameterwert an die Prozesskoordinationseinrichtung übergeben, welche diesen Parameterwert bei Bedarf zur Verwendung in dem zweiten Steuerungsprozess bzw. dem ersten Steuerungsprozess freigibt. Das heißt, es wird ein Parameterwert aus dem ersten Steuerungsprozess im zweiten Steuerungsprozess verwendet oder umgekehrt. Dadurch kann vermieden werden, dass Erkenntnisse, die in einem Steuerungsprozess bereits gewonnen werden, in einem anderen Steuerungsprozess zeitaufwändig neu gewonnen werden müssen. So werden beispielsweise innerhalb des Fahrgeschwindigkeitsregelungsprozesses, wenn dieser auf konstanten Durchsatz regelt, Prozessgrößen wie die mittlere Schichthöhe ermittelt. Diese Parameterwerte können beispielsweise innerhalb des Reinigungsoptimierungsprozesses vorteilhaft eingesetzt werden. Der Prozesskoordinator kann vorzugsweise diese Parameterwerte übernehmen, verwalten und entscheiden, wann und wie lange ein solcher Parameterwert gültig ist. Sobald ein Steuerungsprozess, welcher diese Parameterwerte verwenden könnte, aktiviert wird, können die Parameterwerte dann dem entsprechenden Steuerungsprozess zur Verfügung gestellt werden. Mit Hilfe der Prozesskoordinationseinheit ist es folglich möglich, die einzelnen Steuerungsprozesse so zu steuern, dass sie optimal aufeinander abgestimmt sind.

Die Erfindung wird im Folgenden unter Hinweis auf die beigefügten Figuren anhand eines Ausführungsbeispiels noch einmal näher erläutert. Es zeigen:
Figur 1 einen schematischen Querschnitt durch einen Mähdrescher,
Figur 2 eine schematische Darstellung eines Ausführungsbeispiels einer erfindungsgemäßen Steuereinrichtung.

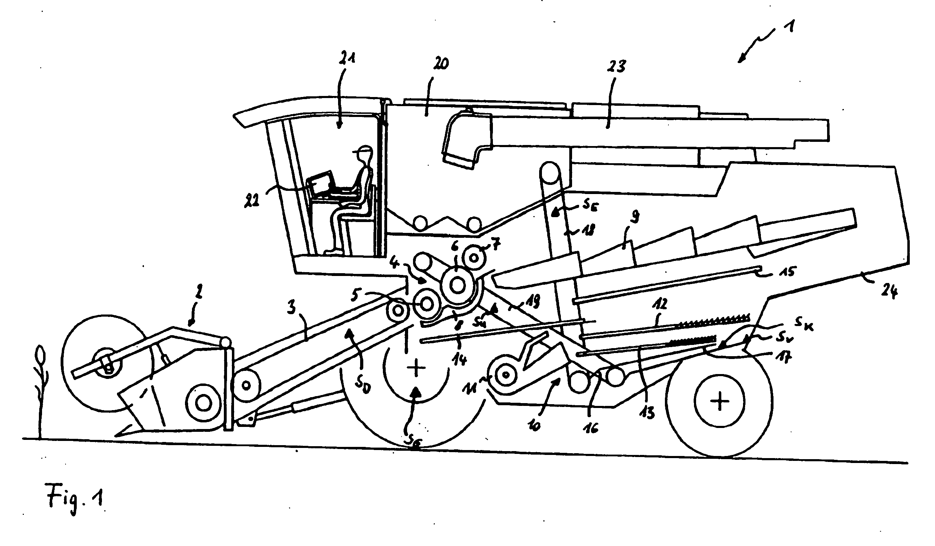

Bei dem in Figur 1 gezeigten Ausführungsbeispiel der Erfindung handelt es sich um einen selbstfahrenden Mähdrescher 1 mit einem sog. Tangential- oder auch Querflussdreschwerk 4 und einem dahinter angeordneten Schüttler 9 als Abscheideeinrichtung. Hierbei handelt es sich um einen Hordenschüttler 9 mit mehreren Schüttlerfahrstufen. Unterhalb des Schüttlers 9 befindet sich eine Reinigungseinrichtung 10, bestehend aus mehreren übereinander angeordneten Sieben 12, 13 und einem Gebläse 11.

Die Arbeitsweise eines solchen Mähdreschers 1 wird nachfolgend beschrieben:

Das Erntegut wird zunächst mittels einer Haspel des Mähtischs auf die Mäheinrichtung 2 gelegt und von Mähmessern abgeschnitten. Das Erntegut wird dann über eine Einzugsschnecke und einen Schrägförderer in einem Einzugskanal 3 zum Eingang des Dreschwerks 4 transportiert. Im Einzugskanal 3 befindet sich eine Durchsatz-Messeinrichtung (Durchsatzsensor) S_{D}, welche die Schichthöhe und somit den Erntegutdurchsatz misst.

Am Eingang des Dreschwerks 4 befinden sich eine Einlege- bzw. Vorbeschleunigertrommel 5 und dahinter in Gutflussrichtung eine Dreschtrommel 6 mit einer quer zur Gutflussrichtung - d. h. quer zur Mähdrescherlängsachse ― liegenden Rotationsachse. Unterhalb der Dreschtrommel 6 befindet sich ein passend geformter Dreschkorb 8. Das aus dem Einzugskanal 3 kommende Erntegut wird durch die Vorbeschleunigertrommel 5 erfasst und dann weiter von der Dreschtrommel 6 durch den zwischen der Dreschtrommel 6 und dem Dreschkorb 8 befindlichen Dreschspalt gezogen. Dabei wird durch die Dreschleisten der Dreschtrommel 6 das Erntegut gedroschen, d. h. geschlagen und/oder zerrieben, wobei ein Korn-Spreu-Gemisch durch den Dreschkorb 8 nach unten fällt, welches dann über einen Auffang- und Führungsboden 14 der Reinigungseinrichtung 10 zugeführt wird, um die Körner von den Beimengungen, d. h. von Halm- und Spreuteilen, zu trennen.

Vom Dreschwerk 4 wird der gedroschene Gutstrom über die Wendetrommel 7 auf den Hordenschüttler 9 gelenkt, durch den die noch im Gutstrom befindlichen Körner sowie evtl. Kurzstroh und Spreu abgetrennt werden. Die Körner, das Kurzstroh und die Spreu gelangen dann über einen weiteren Auffang- und Führungsboden 15 ebenfalls in die Reinigungseinrichtung 10, in welcher die Körner von Kurzstroh und Spreu getrennt werden.

Die Reinigung der Körner von den Nicht-Korn-Bestandteilen in der Reinigungseinrichtung 10 erfolgt in der Weise, dass durch die Sieböffnungen (Löcher, Maschen, Schlitze) in den Sieben 12, 13 mittels des Gebläses 11 Wind hindurchgeblasen wird, welcher das über die Siebe 12, 13 geführte Erntegut auflockert und für das Heraustrennen der spezifisch leichteren Spreu- und Kurzstrohanteile sorgt, während die schweren Erntegutkörner durch die Sieböffnungen fallen. Hierbei sind ein Obersieb 12 und ein Untersieb 13 bereichsweise übereinander angeordnet, so dass das Erntegut in verschiedenen Stufen unterschiedlich fein gesiebt wird.

Die Körner, welche durch beide Siebe 12, 13 der Reinigungseinrichtung 10 gelangt sind, fallen auf einen ersten Auffang- und Führungsboden 16 und werden einer Kornförderschnecke zugeführt. Sie werden dann von einem Elevator 18 in einen Korntank 20 des Mähdreschers 1 befördert und können dort bei Bedarf mit einem Tankentleerförderer 23 auf einen Transportwagen umgeladen werden. Die Ertragsmenge kann mit Hilfe einer Ertragsmengen-Messeinrichtung (Ertragsmengen-Sensor) S_{E} gemessen werden, die sich im Elevator 18 oder am Ausgang des Elevators 18 befindet und dort die transportierte Gesamtmenge misst, beispielsweise anhand des vom Elevator 18 transportierten Gewichts oder durch optische und/oder kapazitive Messungen etc.

Die Teilchen, die in der Reinigungsvorrichtung 10 erst am hinteren Ende durch die Sieböffnungen des Obersiebs 12 fallen, sind in der Regel schwerere Teilchen, d. h. Teilchen, welche ein Korn enthalten, das sich nicht vollständig von anderen Bestandteilen des Getreides gelöst hat. Diese Teilchen fallen hinter dem Untersieb 13 auf einen zweiten Auffang- und Führungsboden 17, welcher unterhalb und etwas hinter dem ersten Auffang- und Führungsboden 16 angeordnet ist, und werden als sogenannte Überkehr über einen Überkehrelevator 19 noch einmal zum Dreschwerk 4 zurückgeführt.

Bestandteile, die nicht durch das Obersieb 12 fallen, werden als Verlust ausgeworfen. Ebenso wandern das Stroh sowie ein bestimmter Prozentsatz an Verlustkörnern über den Hordenschüttler 9 zum hinteren Ende 24 des Mähdreschers 1 und werden dort ausgeworfen.

Zum Messen der Reinigungsverluste befindet sich direkt unterhalb des hinteren Endes des Obersiebs 12 eine Reinigungsverlust-Messeinrichtung (Verlustsensor) S_{V}, welche üblicherweise als Klopfsensor aufgebaut ist. Das von diesem Verlustsensor S_{V} erfasste Signal ist ein Maß dafür, wie viele Bestandteile unmittelbar hinter dem Obersieb 12 nach unten fallen. Daraus lässt sich der Gesamtverlust relativ gut einschätzen.

Die Volumenüberkehr kann wiederum mit Hilfe einer Volumenüberkehr-Messeinrichtung (Volumenüberkehr-Sensor) Sᵤ gemessen werden, die sich im Überkehrelevator 19 befindet und dort die transportierte Gesamtmenge misst, beispielsweise ebenfalls anhand des vom Überkehrelevator 19 transportierten Gewichts oder durch optische und/oder kapazitive Messungen etc.

Der Kornanteil innerhalb der Volumenüberkehr, d. h. die Kornüberkehr, wird mit einer Kornüberkehr-Messeinrichtung (Kornüberkehr-Sensor) S_{K} gemessen, welche auf dem zweiten Auffang- und Führungsboden 16 hinter dem Untersieb 13 angeordnet ist. Auch hierbei handelt es sich vorzugsweise um einen Klopfsensor, dessen Ausgangssignal ein Maß für die hinter dem Untersieb 13 in die Überkehr fallenden Körner ist.

Über eine Geschwindigkeitsmesseinrichtung S_{G} kann die aktuelle Fahrgeschwindigkeit des Mähdreschers 1 ermittelt werden.

All diese Messeinrichtungen S_{D}, S_{E}, S_{V}, S_{U}, S_{K}, S_{G} sind mit einer Steuereinrichtung 25 verbunden. An diese Steuereinrichtung 25 ist außerdem ein Bedienerterminal 22 angeschlossen, mit dem ein Fahrer die Steuereinrichtung 25 bedienen bzw. programmieren kann. Dieses Bedienerterminal 22 befindet sich innerhalb der Fahrerkabine 21.

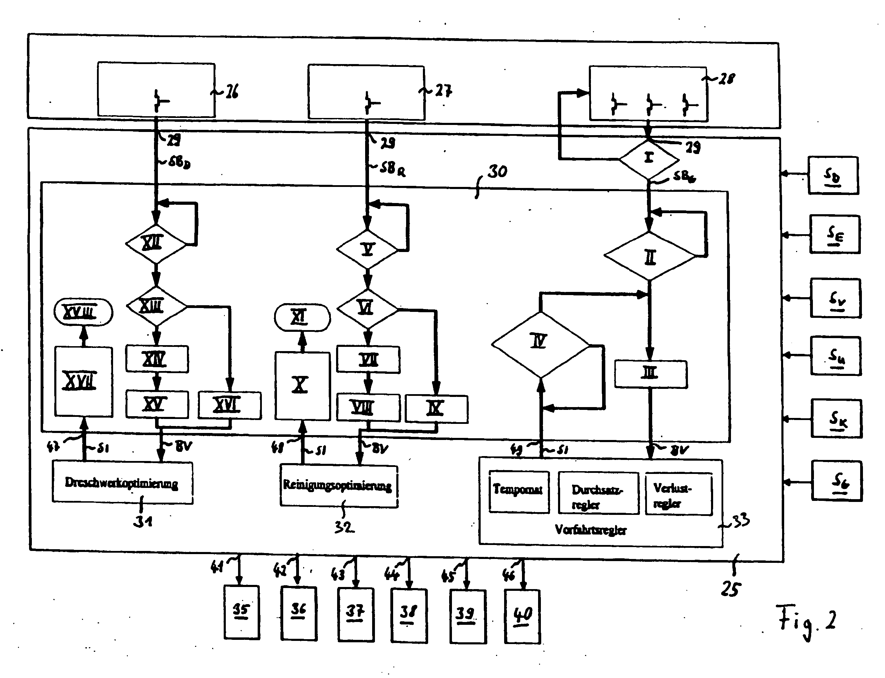

Die Verbindung der einzelnen Messeinrichtungen S_{D}, S_{E}, S_{V}, S_{U}, S_{K}, S_{G} und des Bedienerterminals 22 mit der Steuereinrichtung 25 sowie die Steuereinrichtung 25 selbst sind der Übersichtlichkeit wegen in Figur 1 nicht dargestellt. Stattdessen findet sich eine etwas detailliertere Darstellung in Figur 2, auf die für die weiteren Erläuterungen verwiesen wird.

Wie in dieser Figur zu sehen ist, umfasst das Bedienerterminal 22 u. a. drei Bedienschalter 26, 27, 28. Der erste Schalter dient zur Einstellung des Dreschwerkoptimierungsprozesses. Der zweite Schalter dient zur Einstellung des Reinigungsoptimierungsprozesses. Bei dem dritten Schalter 28 handelt es sich um einen Auswahlschalter 28, mit dem der Geschwindigkeitsregelungsprozess, der sog. "Vorfahrtsregler", geschaltet werden kann. Mit Hilfe dieser Schalter 26, 27, 28 kann der Bediener Steuerbefehle SB_{D}, SB_{R}, SB_{G} eingeben, um die betreffenden Steuerungsprozesse in bestimmte Betriebsarten zu schalten. Diese Steuerungsbefehle SB_{D}, SB_{R}, SB_{G} werden dann über Schnittstellen 29 an die Steuereinrichtung 25 übergeben.

Es ist klar, dass anstelle des dort vereinfacht dargestellten Bedienerterminals 22 mit drei verschiedenen Schaltern 26, 27, 28 das Bedienerterminal 22 auch in anderer Weise aufgebaut sein kann. Beispielsweise kann es sich um ein erheblich umfangreicheres Bedienerterminal handeln, auf dem noch weitere Schalter oder sonstige Bedienelemente zur Einstellung anderer Komponenten vorhanden sind und auf dem verschiedenste Informationen für den Bediener angezeigt werden. Insbesondere ist es möglich, dass sämtliche Schalter bzw. sonstige Bedienelemente in Form eines Touchpads realisiert sind.

Ebenso ist es auch möglich, dass anstelle von einzelnen Teil-Schnittstellen 29 für die Erfassung der Steuerbefehle SB_{D}, SB_{R}, SB_{G} der einzelnen Schalter 26, 27, 28 nur eine gemeinsame Datenschnittstelle zwischen dem Bedienerterminal 22 und der Steuereinrichtung 25 besteht, über die alle Daten, Schaltbefehle etc. übermittelt werden.

Wie in Figur 2 dargestellt, weist die Steuereinrichtung außerdem sechs verschiedene Steuersignalausgänge 41, 42, 43, 44, 45, 46 auf, mit denen verschiedene Aggregate der Erntemaschine 1 angesteuert werden. Die ersten beiden Steuereingänge 41, 42 sind mit dem Dreschtrommelantrieb 35 und der Dreschspalt-Verstelleinrichtung 36 der Drescheinrichtung 4 verbunden. Die nachfolgenden Steuersignalausgänge 43, 44, 45 sind mit dem Lüfterantrieb 37, der Obersiebeinstellung 38 und der Untersiebeinstellung 39 der Reinigungseinrichtung 10 verbunden. Ein weiterer Steuersignalausgang 46 ist mit dem Antriebsaggregat 40 der Erntemaschine 1 verbunden. Hierüber wird die Fahrgeschwindigkeit geregelt. Über die Steuersignalausgänge 41, 42, 43, 44, 45, 46 werden entsprechende Steuersignale an die jeweiligen Komponenten 35, 36, 37, 38, 39, 40 als Sollwerte übergeben. Über (nicht dargestellte) Sensoren kann von der Steuereinrichtung 25 geprüft werden, ob die gewünschten Einstellwerte tatsächlich erreicht werden.

Die Steuereinrichtung 25 selbst ist hier in Form eines programmierbaren Mikroprozessors ausgebildet, auf dem die dargestellten einzelnen Komponenten, hier eine Prozesskoordinationseinrichtung 30, eine Prozesssteuerungseinheit 31 zur Durchführung des Dreschwerkoptimierungsprozesses, eine Prozesssteuerungseinheit 32 zur Realisierung des Reinigungsoptimierungsprozesses und eine Prozesssteuerungseinheit 33 zur Durchführung des Fahrgeschwindigkeitsregelungsprozesses in Form von Modulen realisiert sind.

In Figur 2 sind im Übrigen nur die Komponenten der Steuereinrichtung 25 dargestellt, welche nachfolgend zur Verdeutlichung der Erfindung benötigt werden. Es ist klar, dass eine solche Steuereinrichtung 25 auch noch weitere, nicht dargestellte Arbeitsaggregate, beispielsweise eine Schnitthöheneinstellung, ansteuern kann bzw. dass die Steuereinrichtung auch gemeinsam mit Ansteuereinrichtungen für andere Arbeitsaggregate in Form von Modulen in einer Gesamt-Steuereinrichtung des Mähdreschers 1 angeordnet sein kann. Ebenso kann eine solche Steuereinrichtung 25 auch noch weitere Messwerteingänge und Steuerparameterausgänge aufweisen. Insbesondere kann der Mähdrescher 1 noch weitere Sensoreinrichtungen im Korntank bzw. am Ausgang des Kornelevators aufweisen, z. B. Kornbruchdetektoren, mit denen beschädigte bzw. gebrochene Körner nachgewiesen werden können, deren Messwerte an die Steuereinrichtung übergeben werden.

Wie bereits erwähnt, ist in der in Figur 2 dargestellten Steuereinrichtung 25 eine Dreschwerkoptimierungsprozess-Steuerungseinheit 31 realisiert. Der Dreschwerkoptimierungsprozess hat insgesamt nur zwei Betriebsarten, nämlich die Betriebsarten "aktiv" und "inaktiv". Das heißt, dieser Prozess kann beispielsweise über ein von dem Prozesskoordinator 30 an die Dreschwerk-optimierungsprozess-Steuerungseinheit 31 übergebenes Betriebsartvorgabesignal BV aktiviert oder deaktiviert werden. In der Regel ist es bei dem vorliegenden Ausführungsbeispiel jedoch so, dass durch das Betriebsartvorgabesignal BV der Dreschwerkoptimierungsprozess nur aktiviert wird und sich der Prozess selbsttätig wieder deaktiviert, wenn er beendet ist, d. h. wenn die optimalen Dreschwerkeinstellungen gefunden sind. In diesem Fall wird ein entsprechendes Statussignal SI an einen Statussignaleingang 47 der Prozesskoordinationseinrichtung 30 zurückgeliefert.

In ähnlicher Weise ist eine Reinigungsoptimierungsprozess-Steuerungseinheit 32 aufgebaut. Auch diese wird durch ein Betriebsartvorgabesignal BV aktiviert und somit in die Betriebsart "aktiv" geschaltet. Sind die optimalen Reinigungseinrichtungswerte gefunden, so ist der Reinigungsoptimierungsprozess abgeschlossen und wird selbsttätig deaktiviert. Dann wird eine entsprechende Statusinformation SI an einen Statusinformationseingang 48 der Prozesskoordinationseinrichtung 30 zurückgeliefert.

Die dritte Prozesssteuerungseinheit 33 ist der Vorfahrtsregler 33. Neben der Betriebsart "inaktiv" gibt es hier drei aktive Betriebsarten, welche als einzelne Blöcke dargestellt sind. Über ein Betriebsartvorgabesignal wird hier von der Prozesskoordinationseinrichtung 30 jeweils der passende Modus eingeschaltet bzw. der Vorfahrtsregler 33 deaktiviert. Bei der einen Betriebsart handelt es sich um den Tempomaten, bei dem auf eine fixe Sollgeschwindigkeit geregelt wird. Bei der zweiten Betriebsart handelt es sich um einen Durchsatzregelungsprozess, bei dem die Geschwindigkeit so geregelt wird, dass der Durchsatz konstant ist. Dies kann beispielsweise mit Hilfe des Durchsatzsensors S_{D} kontrolliert werden. Bei der dritten Betriebsart handelt es sich um einen Verlustregelungsprozess, bei dem die Geschwindigkeit so reguliert wird, dass die Erntegutverluste konstant sind. Dies kann beispielsweise mit Hilfe des Verlustsensors S_{V} kontrolliert werden.

Auch hier wird ein Statussignal SI, welches Informationen über die aktuelle Betriebsart des Vorfahrtsreglers enthält, an einen Statusinformationseingang 49 der Prozesskoordinationseinrichtung 30 zurückgeliefert.

Im Folgenden werden die möglichen Abläufe innerhalb der Steuereinrichtung 25 bzw. innerhalb der Prozesskoordinationseinrichtung 30 beschrieben, um auf Basis von eingegebenen Steuerbefehlen SB_{D}, SB_{R}, SB_{G} die einzelnen Prozesssteuerungseinheiten 31, 32, 33 mit Hilfe der Betriebsartvorgabesignale BV so anzusteuern, dass es keine Kollisionen zwischen den verschiedenen Steuerungsprozessen gibt.

Bezüglich des Fahrgeschwindigkeitsregelungsprozesses wird der mit Hilfe des Wahlschalters 28 für den Vorfahrtsregler 33 ausgelöste Steuerungsbefehl SB_{G} ― da mit diesem Wahlschalter drei verschiedene Betriebsarten zur Aktivierung des Vorfahrtsreglers angewählt werden können - zunächst in einem ersten Prozessschritt I innerhalb der Steuereinrichtung 25 einer Abfrageschleife zugeführt, in der permanent abgefragt wird, ob der Steuerungsbefehl SB_{G} geändert wurde. Wenn ja, wird dieser Steuerungsbefehl SB_{G} an die Prozesskoordinationseinrichtung 30 übergeben. Dort wird in einer weiteren Abfrageschleife im Prozessschritt II zunächst geklärt, ob der Dreschwerk- oder der Reinigungsoptimierungsprozess aktiv ist. Ist dies der Fall, so wird so lange abgewartet, bis der Prozess beendet ist. Das heißt, die Änderung der Betriebsart des Vorfahrtsreglers 33 ist in diesem Fall vorübergehend blockiert.

Nur, wenn weder der Dreschwerkoptimierungsprozess noch der Reinigungsoptimierungsprozess aktiv sind, wird im Prozessschritt III auf Basis des Steuerbefehls SB_{G} die Betriebsart des Vorfahrtsreglers 33 festgelegt und ein entsprechendes Betriebsartvorgabesignal BV an den Vorfahrtsregler 33 übergeben. Über den Statussignaleingang 49 werden ständig vom Vorfahrtsregler 33 Statusinformationen an die Prozesskoordinationseinrichtung 30 übergeben, so dass diese über die aktuelle Betriebsart informiert ist.

Grundsätzlich ist es aber auch möglich, dass in der Prozesskoordinationseinrichtung 30 eine Art Logbuch geführt wird, in dem die Betriebsartvorgabesignale BV gespeichert sind, so dass aufgrund der von der Prozesskoordinationseinrichtung 30 ausgegebenen Betriebsartvorgabesignale ohnehin klar ist, in welcher Betriebsart sich die jeweiligen Prozesssteuerungseinheiten 31, 32, 33 befinden. Die Übermittlung einer Statusinformation SI hat jedoch den Vorteil, dass ― wenn z. B. die Prozesssteuerungseinheiten 31, 32, 33 direkt unter Umgehung der Prozesskoordinationseinrichtung 30 angesteuert werden, beispielsweise eine Notfalldeaktivierung durchgeführt wird - die Prozesskoordinationseinrichtung 30 hierüber informiert ist.

Auf Basis der Statusinformationen SI der Dreschwerkoptimierungsprozess-Steuerungseinheit 31 und der Reinigungsoptimierungsprozess-Steuerungseinheit 32 wird im Prozessschritt IV zunächst geprüft, ob die Betriebsart der Dresch- oder Reinigungs-Optimierungsprozesse geändert wurde. Diese Abfrage erfolgt permanent in Form einer Schleife. Stellt sich heraus, dass die Dresch- und/oder Reinigungsoptimierung geändert wurde, so wird ggf. basierend auf bestimmten Regelungen im Schritt III die Betriebsart des Vorfahrtsreglers 33 neu festgelegt. Beispielsweise wird bei einer Aktivierung des Dreschwerk-Optimierungsprozesses oder des Reinigungs-Optimierungsprozesses automatisch der Vorfahrtsregler 33 auf die Betriebsart "Durchsatzregelung" gestellt. Ist dann der jeweilige Optimierungsprozess beendet, wird diese Betriebsartänderung des Dreschwerk-Optimierungsprozesses oder Reinigungs-Optimierungsprozesses wieder automatisch erkannt. Dann wird dementsprechend der Vorfahrtregler 33 wieder auf die vorherige Betriebsart zurückgestellt.

Auch der von dem Schalter 27 zur Vorwahl des Reinigungsoptimierungsprozesses kommende Steuerbefehl SB_{R} wird in der Prozesskoordinationseinrichtung 30 zunächst ggf. blockiert. Hier wird im Prozessschritt V zunächst geklärt, ob aktuell der Dreschwerk-Optimierungsprozess aktiv ist. Nur, wenn dies nicht der Fall ist, kann überhaupt der Reinigungsoptimierungsprozess aktiviert werden. In diesem Fall wird dann im Prozessschritt VI zunächst geprüft, ob der Vorfahrtsregler 33 aktiv ist. Ist dies der Fall, so wird im Prozessschritt VII zunächst die aktuelle Betriebsart des Vorfahrtsreglers 33 geprüft und dann im Schritt VIII der Vorfahrtsregler 33 in die Betriebsart "Durchsatzregelung" umgeschaltet, sofern er nicht ohnehin in dieser Betriebsart läuft. Wird im Prozessschritt VI dagegen festgestellt, dass sich der Vorfahrtregler 33 in der Betriebsart "nicht aktiv" befindet, wird in einem Schritt IX auf einem Bedienerterminal eine Anzeige eingeblendet, mit der dem Fahrer ein Geschwindigkeitsbereich vorgegeben wird, den dieser manuell zur Durchführung des Reinigungsoptimierungsprozesses einhalten muss. Ob und in welcher Weise diese Vorgabe erfolgt, hängt aber letztlich von der konkreten Art des Reinigungsoptimierungsprozesses ab. Es erfolgt dann die Aktivierung des Reinigungsoptimierungsprozesses durch Ausgabe eines Betriebsartvorgabesignals an die Prozesssteuerungseinheit 32.

Beispielsweise könnte ein solcher Reinigungsoptimierungsprozess in der Weise ablaufen, dass bei möglichst konstantem Durchsatz einzelne Aggregate der Reinigungseinrichtung, z. B. die Obersiebeinstellung, die Untersiebeinstellung oder die Lüfterdrehzahl in einem weiten Bereich variiert werden und dann die Abhängigkeiten der Verluste, der Kornüberkehr und der Volumenüberkehr von den einzelnen Parametern festgestellt werden. Es können dann auf Basis dieser Messwerte mathematische Funktionen ermittelt werden und mit Hilfe dieser mathematischen Funktionen Optimalwerte für die einzelnen Einstellparameter gesucht werden.

Wenn der Reinigungsoptimierungsprozess beendet wird, wird dies als Statusinformation SI an einen Statusinformationseingang 48 der Prozesskoordinationseinrichtung 30 übermittelt. Es wird dann im Verfahrensschritt X beispielsweise dafür gesorgt, dass, sofern der Vorfahrtsregler 33 im Prozessschritt VIII umgeschaltet wurde, der Vorfahrtsregler 33 nun wieder in die alte Betriebsart zurückgeschaltet wird. Alternativ kann auch die im Verfahrensschritt IX aktivierte Anzeige wieder deaktiviert werden, mit der dem Fahrer die zur Reinigungsoptimierung einzuhaltende Geschwindigkeit vorgegeben wird. Im Verfahrensschritt XI ist schließlich der Reinigungsoptimierungsprozess komplett beendet.

In analoger Form erfolgt die Koordinierung des Dreschwerkoptimierungsprozesses. Erhält hier die Steuereinrichtung 25 über die Schnittstelle 29 von dem Vorwahlschalter 26 einen entsprechenden Steuerungsbefehl SB_{D}, so wird im Verfahrensschritt XII zunächst geprüft, ob der Reinigungsoptimierungsprozess aktiv ist oder nicht. Nur, wenn der Reinigungsoptimierungsprozess nicht aktiv ist, kann der Dreschwerkoptimierungsprozess aktiviert werden. Auch hier wird in einem Verfahrensschritt XIII zunächst geprüft, ob der Vorfahrtsregler 33 aktiv ist. Ist dies der Fall, wird im Verfahrensschritt XIV die genaue Betriebsart des Vorfahrtsreglers 33 abgefragt und, sofern dies erforderlich ist, im Verfahrensschritt XV der Vorfahrtsregler 33 auf die Betriebsart "Durchsatzregelung" umgeschaltet. Sofern der Vorfahrtsregler 33 nicht aktiv ist, wird im Verfahrensschritt XVI eine entsprechende Anzeige für den Fahrer eingeblendet, welche Geschwindigkeit er während des Dreschwerkoptimierungsprozesses einzuhalten hat. Erst dann wird ein Betriebsartvorgabesignal BV an die Prozesssteuerungseinheit 31 zur Aktivierung des Dreschwerkoptimierungsprozesses übergeben. Ebenso wird, wenn der Dreschwerkoptimierungsprozess beendet ist, von der Prozesssteuerungseinheit 31 eine Statusinformation SI über einen Statusinformationseingang 47 an die Prozesskoordinationseinrichtung 30 zurückgeliefert. Diese sorgt dann im Verfahrensschritt XVII dafür, dass ggf. der alte Vorfahrtsreglermodus wieder eingeschaltet wird oder dass die Anzeige für die Geschwindigkeitsvorgabe für den Fahrer wieder ausgeblendet wird. Im Verfahrensschritt XVIII ist dann der Dreschwerkoptimierungsprozess endgültig beendet.

Anstelle separater Statusinformationseingänge 47, 48, 49 für die einzelnen Prozesssteuerungseinheiten 31, 32, 33 kann die Prozesskoordinationseinrichtung 30 selbstverständlich auch einen zentralen Statusinformationseingang aufweisen, über den alle Prozesssteuerungseinheiten 31, 32, 33 ihre Statussignale SI übergeben. Ebenso kann die Prozesskoordinationseinrichtung 30 anstelle einer Mehrzahl von Steuersignalausgängen 41, 42, 43, 44, 45, 46 als Steuersignalschnittstelle nur einen gemeinsamen Steuersignalausgang aufweisen, über den die verschiedenen Aggregate der Erntemaschine mit Steuersignalen beaufschlagt werden. Diese Steuersignalschnittstelle kann auch mit dem Statussignaleingang und/oder der Schnittstelle zur Erfassung der Steuerbefehle auch zu einer gemeinsamen Schnittstelle verbunden sein. Eine solche allgemeine Schnittstelle lässt sich z. B. mit Hilfe eines Bus-Systems in der Erntemaschine realisieren.

Dieses relativ einfache Ausführungsbeispiel zeigt, wie mit Hilfe einer Prozesskoordinationseinrichtung 30 ohne großen technischen Aufwand dafür gesorgt werden kann, dass verschiedene Steuerungsprozesse in separaten Prozesssteuerungseinheiten 31, 32, 33 innerhalb einer Erntemaschine 1 realisiert werden können, ohne dass es zu Kollisionen zwischen den einzelnen Prozessen kommt. Die einzelnen Prozesse können sich mit Hilfe der Prozesskoordinationseinrichtung 30 sogar positiv gegenseitig ergänzen.

Aus Sicherheitsgründen ist das System so ausgelegt, dass der Fahrer während eines Ernteeinsatzes jederzeit in der Lage ist, einzelne oder alle eingestellten Maschinenparameter manuell zu übersteuern. Es wird abschließend noch einmal darauf hingewiesen, dass es sich bei dem in den Figuren dargestellten Mähdrescher und der Steuerung sowie dem im Zusammenhang damit erläuterten konkreten Verfahren lediglich um Ausführungsbeispiele handelt, welche vom Fachmann in vielfacher Hinsicht variiert werden können, ohne den beanspruchten Rahmen der Erfindung zu verlassen. So kann z.B. das erfindungsgemäße Verfahren bzw. eine entsprechende Steuereinrichtung auch zur Einstellung anderer Arbeitsaggregate in anderen Mähdreschertypen verwendet werden.

### Bezugszeichenliste

- 1: Mähdrescher
- 2: Mäheinrichtung
- 3: Einzugskanal
- 4: Drescheinrichtung
- 5: Vorbeschleunigertrommel
- 6: Dreschtrommel
- 7: Wendetrommel
- 8: Dreschkorb
- 9: Hordenschüttler
- 10: Reinigungseinrichtung
- 11: Gebläse
- 12: Obersieb
- 13: Untersieb
- 14: Auffang- und Führungsboden
- 15: Auffang- und Führungsboden
- 16: Auffang- und Führungsboden
- 17: Auffang- und Führungsboden
- 18: Elevator
- 19: Überkehrelevator
- 20: Korntank
- 21: Fahrerkabine
- 22: Bedienerterminal
- 23: Tankentleerförderer
- 24: Mähdrescherende
- 25: Steuereinrichtung
- 26: Schalter
- 27: Schalter
- 28: Schalter
- 29: Schnittstelle
- 30: Prozesskoordinationseinrichtung
- 31: Dreschwerkoptimierungsprozess-Steuerungseinheit
- 32: Reinigungsoptimierungsprozess-Steuerungseinheit
- 33: Geschwindigkeitsregelungsprozess-Steuerungseinheit (Vorfahrtregler)
- 35: Dreschtrommelantrieb
- 36: Dreschspalt-Verstelleinrichtung
- 37: Lüfterantrieb
- 38: Obersiebeinstellung
- 39: Untersiebeinstellung
- 40: Antriebsaggregat
- 41: Steuersignalausgang
- 42: Steuersignalausgang
- 43: Steuersignalausgang
- 44: Steuersignalausgang
- 45: Steuersignalausgang
- 46: Steuersignalausgänge
- 47: Statusinformationseingang
- 48: Statusinformationseingang
- 49: Statusinformationseingang
- BV: Betriebsartvorgabesignal
- SI: Statussignal
- S_{D}: Durchsatz-Messeinrichtung
- S_{V}: Reinigungsverlust-Messeinrichtung
- S_{E}: Ertragsmengen-Messeinrichtung
- S_{G}: Geschwindigkeitsmesseinrichtung
- S_{K}: Kornüberkehr-Messeinrichtung
- S_{U}: Volumenüberkehr-Messeinrichtung
- SB_{D}: Steuerbefehl
- SB_{R}: Steuerbefehl
- SB_{G}: Steuerbefehl

## Patentansprüche

1. Verfahren zur Steuerung einer Erntemaschine (1), bei dem auf Basis bestimmter erfasster Steuerbefehle (SB_{D}, SB_{R}, SB_{G}) in mehreren separaten Steuerungsprozessen verschiedene Aggregate (35, 36, 37, 38, 39, 40) der Erntemaschine (1) eingestellt und/oder überwacht werden, **dadurch gekennzeichnet, dass** die Steuerungsprozesse einen Reinigungsoptimierungsprozess, einen Dreschwerkoptimierungsprozess und einen Fahrgeschwindigkeitsregelungsprozess umfassen, wobei mittels einer Prozesskoordinationseinheit (30) eine Betriebsart eines ersten Steuerungsprozesses, welcher den Fahrgeschwindigkeitsregelungsprozess umfasst, unter Berücksichtigung einer aktuellen Betriebsart eines zweiten Steuerungsprozesses, der den Reinigungsoptimierungsprozess oder den Dreschwerkoptimierungsprozess umfasst, bestimmt wird, wobei der Fahrgeschwindigkeitsregelungsprozess bei einem Einschalten des Reinigungsoptimierungsprozesses oder des Dreschwerkoptimierungsprozesses in eine Durchsatzregelungs-Betriebsart umgeschaltet wird, während eine Änderung der Betriebsart des Fahrgeschwindigkeitsregelprozesses nur möglich ist, wenn weder der Reinigungsoptimierungsprozess noch der Dreschwerkoptimierungsprozess aktiv sind.

2. Verfahren nach Anspruch 1, **dadurch gekennzeichnet, dass** ein zur Einstellung einer bestimmten Betriebsart eines ersten Steuerungsprozesses bestimmter Steuerbefehl (SB_{D}, SB_{R}, SB_{G}) zunächst an die Prozesskoordinationseinheit (30) übergeben wird, welcher auf Basis des Steuerbefehls (SB_{D}, SB_{R}, SB_{G}) und unter Berücksichtigung der Betriebsart eines zweiten Steuerungsprozesses die Betriebsart des ersten Steuerungsprozesses bestimmt.

3. Verfahren nach einem der Ansprüche 1 bis 2, **dadurch gekennzeichnet, dass** ein in einem ersten Steuerungsprozess oder einem zweiten Steuerungsprozess ermittelter Parameterwert an die Prozesskoordinationseinrichtung übergeben wird, welche den Parameterwert bei Bedarf zur Verwendung in einem zweiten Steuerungsprozess oder ersten Steuerungsprozess freigibt.

4. Verfahren nach einem der Ansprüche 1 bis 3, **dadurch gekennzeichnet, dass** in dem Fahrgeschwindigkeitsregelungsprozess die Geschwindigkeit in einer Tempomat-Betriebsart in Abhängigkeit von einer konstanten Sollgeschwindigkeit geregelt wird.

5. Verfahren nach einem der Ansprüche 1 bis 3, **dadurch gekennzeichnet, dass** in dem Fahrgeschwindigkeitsregelungsprozess die Geschwindigkeit in einer Durchsatzregelungs-Betriebsart in Abhängigkeit von einem Erntegutdurchsatz-Sollwert geregelt wird.

6. Verfahren nach einem der Ansprüche 1 bis 3, **dadurch gekennzeichnet, dass** in dem Fahrgeschwindigkeitsregelungsprozess die Geschwindigkeit in einer Verlustregelungs-Betriebsart in Abhängigkeit von einem Erntegutverlust-Sollwert geregelt wird.

7. Steuereinrichtung (25) zur Steuerung einer Erntemaschine (1) mit
- einer Schnittstelle (29) zur Erfassung von Steuerbefehlen (SB_{D}, SB_{R}, SB_{G}),
- einer Steuersignalschnittstelle (41, 42, 43, 44, 45, 46) zur Ansteuerung verschiedener Aggregate (35, 36, 37, 38, 39, 40) der Erntemaschine (1),
- einer Anzahl von Prozesssteuerungseinheiten (31, 32, 33), welche auf Basis von erfassten Steuerbefehlen (SB_{D}, SB_{R}, SB_{G}) in separaten, definierten Steuerungsprozessen verschiedener Aggregate der Erntemaschine (1) zur Einstellung und/oder Überwachung über die Steuersignalschnittstelle (41, 42, 43, 44, 45, 46) mit Steuersignalen beaufschlagen und
- einer mit den Prozesssteuerungseinheiten (31, 32, 33) verbundenen Prozesskoordinationseinheit (30), welche derart ausgebildet ist, dass sie eine Betriebsart eines ersten Steuerungsprozesses, welcher den Fahrgeschwindigkeitsregelungsprozess umfasst, unter Berücksichtigung einer aktuellen Betriebsart eines zweiten Steuerungsprozesses, der den Reinigungsoptimierunasprozess oder den Dreschwerkoptimierungsprozess umfasst, bestimmt und an die Prozesssteuerungseinheiten (31, 32, 33) entsprechende Betriebsartvorgabesignale (BV) übermittelt, um auf Basis der eingegebenen Steuerbefehle (SB_{D}, SB_{R}, SB_{G}) die einzelnen Prozesssteuerungseinheiten (31, 32, 33) mit Hilfe der Betriebsartvorgabesignale (BV) so anzusteuern, dass es keine Kollisionen zwischen den verschiedenen Steuerungsprozessen gibt, wobei der Fahrgeschwindigkeitsregelungsprozess bei einem Einschalten des Reinigungsoptimierungsprozesses oder des Dreschwerkoptimierungsprozesses in eine Durchsatzregelungs-Betriebsart umgeschaltet wird, während eine Änderung der Betriebsart des Fahrgeschwindigkeitsreglungsprozesses nur möglich ist, wenn weder der Reinigungsoptimierungsprozess noch der Dreschwerkoptimierungsprozess aktiv sind.

8. Steuereinrichtung (25) nach Anspruch 7, **dadurch gekennzeichnet, dass** die Schnittstelle (29) so mit der Prozesskoordinationseinheit (30) verbunden ist, dass von der Schnittstelle (29) erfasste Steuerbefehle (SB_{D}, SB_{R}, SB_{G}) zunächst an die Prozesskoordinationseinheit (30) übergeben werden.

9. Steuereinrichtung nach Anspruch 7 oder 8, **dadurch gekennzeichnet, dass** die Prozesskoordinationseinheit (30) einen Prozessstatuseingang (47, 48, 49) zur Erfassung von Statusinformationen (SI) über die aktuelle Betriebsart eines Steuerungsprozesses aufweist.

10. Erntemaschine (1), insbesondere Mähdrescher, mit einer Steuereinrichtung (25) nach einem der Ansprüche 7 bis 9.

11. Computerprogrammprodukt, welches direkt in einen Speicher einer programmierbaren Steuereinrichtung (25) einer Erntemaschine (1) ladbar ist, mit Programmcode-Mitteln, um alle Schritte eines Verfahrens nach einem der Ansprüche 1 bis 6 auszuführen, wenn das Programmprodukt in der Steuereinrichtung (25) ausgeführt wird.

## Claims

1. A method of controlling a harvesting machine (1) in which various assemblies (35, 36, 37, 38, 39, 40) of the harvesting machine (1) are adjusted and/or monitored on the basis of given detected control commands (SB_{D}, SB_{R}, SB_{G}) in a plurality of separate control processes, **characterised in that** the control processes include a cleaning optimisation process, a threshing mechanism optimisation process and a travel speed regulation process, wherein an operating mode of a first control process which includes the travel speed regulation process is determined by means of a process co-ordination unit (30) having regard to a currently prevailing operating mode of a second control process which includes the cleaning optimisation process or the threshing mechanism optimisation process, wherein when switching on the cleaning optimisation process or the threshing mechanism optimisation process the travel speed regulation process is switched over into a throughput regulating operating mode while a change in the operating mode of the travel speed regulation process is only possible when neither the cleaning optimisation process nor the threshing mechanism optimisation process are active.

2. A method according to claim 1 **characterised in that** a control command (SB_{D}, SB_{R}, SB_{G}) intended for adjusting a given operating mode of a first control process is firstly transmitted to the process co-ordination unit (30) which on the basis of the control command (SB_{D}, SB_{R}, SB_{G}) and having regard to the operating mode of a second control process determines the operating mode of the first control process.

3. A method according to one of claims 1 to 2 **characterised in that** a parameter value ascertained in a first control process or a second control process is transmitted to the process co-ordination device which enables the parameter value as required for use in a second control process or first control process.

4. A method according to one of claims 1 to 3 **characterised in that** in the travel speed regulation process the speed is regulated in a Tempomat operating mode in dependence on a constant reference speed.

5. A method according to one of claims 1 to 3 **characterised in that** in the travel speed regulation process the speed is regulated in a throughput regulating operating mode in dependence on a crop material throughput reference value.

6. A method according to one of claims 1 to 3 **characterised in that** in the travel speed regulation process the speed is regulated in a loss regulating operating mode in dependence on a crop material loss reference value.

7. A control device (25) for controlling a harvesting machine (1) comprising
- an interface (29) for the detection of control commands (SB_{D}, SB_{R}, SB_{G}),
- a control signal interface (41, 42, 43, 44, 45, 46) for the actuation of various assemblies (35, 36, 37, 38, 39, 40) of the harvesting machine (1),
- a number of process control units (31, 32, 33) which on the basis of detected control commands (SB_{D}, SB_{R}, SB_{G}) in separate defined control processes act on various assemblies of the harvesting machine (1) with control signals for adjustment and/or monitoring purposes by way of the control signal interface (41, 42, 43, 44, 45, 46), and
- a process co-ordination unit (30) which is connected to the process control units (31, 32, 33) and which is so designed that it determines an operating mode of a first control process which includes the travel speed regulation process having regard to a currently prevailing operating mode of a second control process which includes the cleaning optimisation process or the threshing mechanism optimisation process and communicates corresponding operating mode presetting signals (BV) to the process control units (31, 32, 33) in order on the basis of the inputted control commands (SB_{D}, SB_{R}, SB_{G}) to actuate the individual process control units (31, 32, 33) by means of the operating mode presetting signals (BV) in such a way that there are no collisions between the various control processes, wherein when switching on the cleaning optimisation process or the threshing mechanism optimisation process the travel speed regulation process is switched over into a throughput regulating operating mode while a change in the operating mode of the travel speed regulation process is only possible when neither the cleaning optimisation process nor the threshing mechanism optimisation process are active.

8. A control device (25) according to claim 7 **characterised in that** the interface (29) is so connected to the process co-ordination unit (30) that control commands (SB_{D}, SB_{R}, SB_{G}) detected by the interface (29) are firstly transmitted to the process co-ordination unit (30).

9. A control device according to claim 7 or claim 8 **characterised in that** the process co-ordination unit (30) has a process status input (47, 48, 49) for the acquisition of items of status information (SI) about the current operating mode of a control process.

10. A harvesting machine (1), in particular a combine harvester, comprising a control device (25) according to one of claims 7 to 9.

11. A computer program product which is loadable directly into a memory of a programmable control device (25) of a harvesting machine (1), with program code means for carrying out all steps of a method according to one of claims 1 to 6 when the program product is executed in the control device (25).

## Revendications

1. Procédé de commande d'une machine de récolte (1), dans lequel différents organes (35, 36, 37, 38, 39, 40) de la machine de récolte (1) sont réglés et/ou surveillés dans plusieurs processus de commande séparés sur la base d'instructions de commande définies (SB_{D}, SB_{R}, SB_{G}) saisies, **caractérisé en ce que** les processus de commande comprennent un processus d'optimisation du nettoyage, un processus d'optimisation du système de battage et un processus de régulation de la vitesse de marche, un mode de fonctionnement d'un premier processus de commande, lequel comprend le processus de régulation de la vitesse de marche, étant déterminé au moyen d'une unité de coordination de processus (30) en tenant compte d'un mode de fonctionnement instantané d'un deuxième processus de commande qui comprend le processus d'optimisation du nettoyage ou le processus d'optimisation du système de battage, le processus de régulation de la vitesse de marche étant passé dans un mode de fonctionnement de régulation du débit en cas d'activation du processus d'optimisation du nettoyage ou du processus d'optimisation du système de battage, tandis qu'un changement du mode de fonctionnement du processus de régulation de la vitesse de marche n'est possible que si ni le processus d'optimisation du nettoyage ni le processus d'optimisation du système de battage ne sont actifs.

2. Procédé selon la revendication 1, **caractérisé en ce qu'**une instruction de commande définie (SB_{D}, SB_{R}, SB_{G}) pour régler un mode de fonctionnement défini d'un premier processus de commande est transmise d'abord à une unité de coordination de processus (30) qui détermine le mode de fonctionnement du premier processus de commande sur la base de l'instruction de commande (SB_{D}, SB_{R}, SB_{G}) et en tenant compte du mode de fonctionnement d'un deuxième processus de commande.

3. Procédé selon une des revendications 1 à 2, **caractérisé en ce qu'**une valeur de paramètre déterminée dans un premier processus de commande ou dans un deuxième processus de commande est transmise au dispositif de coordination de processus, lequel valide si nécessaire la valeur de paramètre afin qu'elle soit utilisée dans un deuxième processus de commande ou un premier processus de commande.

4. Procédé selon une des revendications 1 à 3, **caractérisé en ce que**, dans le processus de régulation de la vitesse de marche, dans un mode de fonctionnement « régulation de vitesse », la vitesse est régulée en fonction d'une vitesse de consigne constante.

5. Procédé selon une des revendications 1 à 3, **caractérisé en ce que**, dans le processus de régulation de la vitesse de marche, dans un mode de fonctionnement « régulation du débit », la vitesse est régulée en fonction d'une valeur de consigne du débit de produit de récolte.

6. Procédé selon une des revendications 1 à 3, **caractérisé en ce que** dans le processus de régulation de la vitesse de marche, dans un mode de fonctionnement « régulation des pertes », la vitesse est régulée en fonction d'une valeur de consigne des pertes de produit de récolte.

7. Dispositif de commande (25) pour commander une machine de récolte (1), comprenant
- une interface (29) pour saisir des instructions de commande (SB_{D}, SB_{R}, SB_{G}),
- une interface de signaux de commande (41, 42, 43, 44, 45, 46) pour commander différents organes (35, 36, 37, 38, 39, 40) de la machine de récolte (1),
- un certain nombre d'unités de commande de processus (31, 32, 33), lesquelles, sur la base d'instructions de commande (SB_{D}, SB_{R}, SB_{G}) saisies, dans des processus de commande séparés définis, appliquent à différents organes de la machine de récolte (1), via l'interface de signaux de commande (41, 42, 43, 44, 45, 46), des signaux de commande pour leur réglage et/ou leur surveillance et
- une unité de coordination de processus (30) reliée aux unités de commande de processus (31, 32, 33), laquelle est conçue de façon à déterminer un premier mode de fonctionnement d'un premier processus de commande, lequel comprend le processus de régulation de la vitesse de marche, en tenant compte d'un mode de fonctionnement instantané d'un deuxième processus de commande qui comprend le processus d'optimisation du nettoyage ou le processus d'optimisation du système de battage, et à transmettre des signaux de prescription de mode de fonctionnement (BV) correspondants aux unités de commande de processus (31, 32, 33) pour, sur la base des instructions de commande (SB_{D}, SB_{R}, SB_{G}) entrées, commander les différentes unités de commande de processus (31, 32, 33) à l'aide des signaux de prescription de mode de fonctionnement (BV), de façon qu'il n'y ait pas de collisions entre les différents processus de commande, le processus de régulation de la vitesse de marche étant passé dans un mode de fonctionnement de régulation du débit en cas d'activation du processus d'optimisation du nettoyage ou du processus d'optimisation du système de battage, tandis qu'un changement du mode de fonctionnement du processus de régulation de la vitesse de marche n'est possible que si ni le processus d'optimisation du nettoyage ni le processus d'optimisation du système de battage ne sont actifs.

8. Dispositif de commande (25) selon la revendication 7, **caractérisé en ce que** l'interface (29) est reliée à l'unité de coordination de processus (30), de façon que les instructions de commande (SB_{D}, SB_{R}, SB_{G}) saisies par l'interface (29) soient transmises d'abord à l'unité de coordination de processus (30).

9. Dispositif de commande selon la revendication 7 ou 8, **caractérisé en ce que** l'unité de coordination de processus (30) présente une entrée d'état de processus (47, 48, 49) pour la saisie d'informations d'état (SI) sur le mode de fonctionnement instantané d'un processus de commande.

10. Machine de récolte (1), en particulier moissonneuse-batteuse, comprenant un dispositif de commande selon une des revendications 7 à 9.

11. Produit logiciel d'ordinateur, lequel peut être chargé directement dans une mémoire d'un dispositif de commande programmable (25) d'une machine de récolte (1), avec des moyens de codage de programme pour exécuter toutes les étapes d'un procédé selon une des revendications 1 à 6 lorsque le produit logiciel est exécuté dans le dispositif de commande (25).
